# EUROPEAN PATENT APPLICATION

(11) **EP 0 725 392 A1**
(43) Date of publication of application: **07.08.1996**
(21) Application number: 96300659.8
(22) Date of filing: 31.01.1996
(51) Int. Cl.: G11B 5/84

(54) **Magnetic recording medium and method for fabricating the same**

(30) Priority: 31.01.1995 JP 14443/95; 28.04.1995 JP 105088/95
(71) Applicant: HOYA CORPORATION, Shinjuku-ku Tokyo (JP)
(72) Inventor: Moroishi, Keiji, Kofu-shi, Yamanashi-ken (JP); Sato, Kiyoshi, Nirasaki-shi, Yamanishi-ken (JP); Kawasumi, Isao, Nirasaki-shi, Yamanashi-ken (JP); Kawai, Hisao, Kitakoma-gun, Yamanashi-ken (JP)
(74) Representative: Read, Matthew Charles

(57) **Abstract**

A magnetic recording medium which includes an underlying layer formed on a glass substrate having a precision-polished surface, a magnetic layer formed on the underlying layer, a protective layer formed on the magnetic layer through another layer or directly not therethrough, and a lubricant layer formed on the protective layer. The underlying layer is made up of a first underlying layer made of Al and second and third underlying layers made of Cr and formed on the first underlying layer, the first underlying layer is set to have a thickness of 10-100 angstroms and the second underlying layer is set to have a thickness corresponding to 2-10 times the thickness of the first underlying layer.

## Description

### BACKGROUND OF THE INVENTION

### Field of the Invention:

The present invention relates to a magnetic recording medium which can be applied to a magnetic disk device and also to a device using the recording medium.

### Description of the Related Art:

Recent greater demand of establishing a high recording density for a magnetic recording medium such as a hard disk has been increasingly made.

A magnetic recording medium such as a hard disk refers generally to such a medium as to be made up of a non-magnetic substrate having an underlying layer, a magnetic layer and a protective layer sequentially formed thereon and to function to perform its recording and reproducing operation when a head slider having a magnetic head mounted thereon runs over the medium as flown therefrom. Accordingly, for the purpose of realizing such a magnetic recording medium having a high recording density, it is important to establish the low-flown running of the head slider and improve the durability of the medium with respect to contact start and stop operation (CSS), in addition to increase the coercive force of the magnetic layer. In other words, it is necessary to make small a distance between the magnetic head and magnetic layer to thereby enable high-density recording and reproducing in a record or reproducing mode by running the head slider as low-flown. Further, when the head slider is run as low-flown from the magnetic recording medium, the repetitive switching operation (CSS) between the sliding and flown runnings at the time of starting and stopping running the head slider causes the abrupt increase of physical and mechanical burden imposed on the magnetic head and magnetic recording medium. For this reason, it also becomes necessary to enhance the durabilities of the magnetic head and magnetic recording medium in the CSS (or to attain a high CSS durability). In addition, as a higher recording density is requested, a demand of reducing noise in the reproducing mode becomes correspondingly severer.

Meanwhile, most existing hard disks employ an aluminum alloy substrate as the non-magnetic substrate, as disclosed in, e.g., Japanese Patent Laid-open Publication No. Hei 04-268213 or No. Hei 4-47527. In this case, a substrate is subjected on its surface to Ni-P plating and polishing operations to obtain an aluminum alloy substrate, the resultant aluminum alloy substrate is subjected to a texture treatment to provide a proper surface roughness to the substrate, and then subjected to a sputtering process by an inline sputter or the like to form thereon an underlying layer, a magnetic layer, a protective layer, etc. sequentially. That is, with these existing hard disks, the uneven rough surface of the aluminum alloy substrate caused by the texture treatment results in appearance on the surface of the protective layer via the underlying and magnetic layers, whereby it can be prevented that the head slider is sticked to the magnetic recording medium or a frictional force between the both exceeds a predetermined value at the time of the CSS.

However, it has been found that this system has a limit in realizing the aforementioned high coercivity, low-flown running and high CSS durability. This is considered to be because the underlying and magnetic layers are sequentially formed on the uneven surface of the alloy substrate caused by the texture treatment, and thus correspondingly have uneven surfaces, so that sputtering particles have different incident angles for different positions on the surface of the layers, thus resulting in that crystals to be grown in the film formation process of the underlying and magnetic layers cannot be always formed favorably. Further, the mechanical properties of the aluminum alloy substrate including hardness are not always sufficient to satisfy the mechanical durability required to attain the low-flown running and high CSS durability. Furthermore, it has been turned out that, for the purpose of attaining good characteristics for the underlying, magnetic and protective layers, this also requires physical and chemical treatments including high temperature heating, for which purpose the aluminum alloy substrate is insufficient in its physical and chemical durability or resistance (such as heat and corrosion resistances) to the above treatments.

As a magnetic recording medium with a high feasibility of easily implementing its high recording density, much attention been recently directed to such a magnetic recording medium as to use a glass substrate as a non-magnetic substrate. Such a magnetic recording medium is disclosed in, for example, U.S.P. 5,087,482, Japanese Patent Laid-open Publication Nos. 62-256215, Hei 02-29923, Hei 03-183015, Hei 04-328317 and Hei 06-29121. The reason why glass is used is as follows. That is, it has been found that glass, which has high mechanical, physical and chemical durabilities and can be flattened in its surface relatively easily with a high plane accuracy, is suitable for realization of a high recording density. With such a magnetic recording medium using the glass substrate, more in detail, an underlying layer, a magnetic layer, a protective layer, etc. are sequentially formed directly on the glass substrate having a precision-polished surface. Unlike the use of the aluminum substrate, no texture treatment is applied to the surface of the substrate and the protective layer is provided with its own uneven surface. For this reason, since the underlying layer and magnetic layer can be formed on the highly-smooth surface of the substrate, the control of crystal growth in the respective underlying and magnetic layers during their formation can be facilitated, thus resulting in that there can be relatively easily obtained layers which have good characteristics. With respect to the surface roughness of the protective layer, further, although the roughness of the aluminum substrate cannot be easily controlled because the rough surface of the aluminum substrate is exhibited indirectly on the protective layer through the underlying and magnetic layers. Compared with the use of the aluminum substrate, the use of the glass substrate relatively facilitates the control of the surface roughness since the protective layer per se can determine its roughness directly.

The inventors of the present application have conducted various sorts of experiments and considerations for attaining a magnetic recording medium having a high recording density with use of the aforementioned glass substrate and, as a result, have found the following fact.

That is, for the purpose of realizing high coercivity, low-flown running and high CSS durability, it is necessary to improve the materials themselves of the magnetic, protective and/or lubricant which directly determine their functions, as a matter of course. It has been found that, in particular, when a glass substrate is employed, the performances of these layers are not necessarily determined by the layers per se alone, but also influenced far beyond our expectation by other conditions such as the material or surface condition of the glass substrate formed with these layers, the combination of these layers or the processing conditions at the time of forming the layers.

This fact has become clear from the strict experiments and consideration conducted especially under strict conditions required for realizing a remarkably high recording density which has been impossible to realize with use of the glass substrate. For example, the use of the glass substrate enables heating treatment at a very high temperature, which has not be expected in the case of using the aluminum alloy substrate (refer to Japanese Patent Laid-open Publication Nos. Hei 04-47527 and 04-268213, for example). When the heating temperature of a film is increased based on the above fact to improve the characteristics of the film itself, the heating treatment at such a high temperature become reversely severe to the other films, which may remarkably deteriorate the characteristics of the other films. When the feasibility of enhancing the film characteristics based on such high-temperature heating treatment is not utilized for example, however, the feasibility of enhancing the overall characteristics will also be reduced. Accordingly, for the purpose of making the most of the advantage of the glass substrate to improve the overall characteristics, it becomes necessary to take such measures that the other films will not influenced by this high-temperature heating treatment. It has been turned out from studies of the inventors of the present application that, for example, when the underlying layer is formed to have a unique multifilm structure and the respective films of the underlying layer are applied with specific heating treatments in a specific order during the formation of the films or when another layer is disposed between the magnetic and protective layers, the overall characteristics can be eventually improved even when the high-temperature heating treatment or other severe treatment is applied during the formation of the other layer, e.g., the magnetic or protective layer, while taking the advantage of the high-temperature treatment and not causing any deterioration of the other films.

Importantly, the realization of a high recording density requires the realization of high coercive force, low-flown running and high CSS durability, but this is not sufficient. That is, it has been turned out that with a high recording density, the level of noise in the reproducing mode and the level of an envelope modulation in one turn of a disk, which were insignificant, become serious and thus these noise and modulation characteristics must also be improved. The noise in the reproducing mode as used herein means such noise as to result from a magnetic recording medium due to non-uniform sizes of magnetic particles or a magnetization inversion width defined between recording bits; whereas, the envelope modulation in one turn of a disk means fluctuations in reproducing output appearing within one turn of the disk at a certain radius position.

According to the studies of the inventors of the present application, it has also been observed that these characteristics are somewhat affected even by the combination of the films of the underlying or magnetic layer, the processing conditions of these films during their formation or the combination of each of the layers with the protective layer formed on the magnetic layer and, among these, by the combination of the films of the underlying layer, which is one of essential factors.

### SUMMARY OF THE INVENTION

It is therefore an object of the present invention to provide a magnetic recording medium which easily allows its high coercivity, low-flown running and high CSS durability and also to provide a method for fabricating the recording medium.

Another object of the present invention is to provide a magnetic recording medium which has a high coercivity and is low and small in noise in a reproducing mode and in envelope modulation within one turn of a disk.

In accordance with an aspect of the present invention, the above object is attained by providing a method for fabricating magnetic recording medium which comprises the steps of forming a first underlying layer made of nonmagnetic material on a glass substrate, forming on the first underlying layer a second underlying layer made of nonmagnetic material and different from the first underlying layer, subjecting to a heating treatment the glass substrate having the second underlying layer already formed thereon, forming a third underlying layer made of nonmagnetic material on the second underlying layer after subjected to the heating treatment, forming a magnetic layer on the third underlying layer, forming a protective layer on the magnetic layer through another layer or directly not therethrough, and forming a lubricant layer on the protective layer.

In accordance with another aspect of the present invention, there is provided a magnetic recording medium which comprises an underlying layer formed on a glass substrate having a precision-polished surface, a magnetic layer formed on the underlying layer, a protective layer formed on the magnetic layer through another layer or directly not therethrough, and a lubricant layer formed on the protective layer, and wherein the underlying layer includes a first underlying layer of a non-texture layer provided on a side contacted with the glass substrate and made of, as major component or components, one or more of Al, Si, Pb, Cu, In, Ga, Ge, Zr or Ti to provide noise reducing effect and a second underlying layer formed on the first underlying layer and made of any of Cr, TiW, Mo, Ti, Ta, W, Zr, Cu, Al, Zn, In and Sn.

### BRIEF DESCRIPTION OF THE DRAWINGS

Fig. 1 shows a cross-sectional view, in a model form, of a structure of a magnetic recording medium manufactured by a method for fabricating a magnetic recording medium in a first embodiment;
Fig. 2 is a table showing measured results of magnetic characteristics in the embodiment 1 and comparative examples 1 to 4;
Fig. 3 is a table showing measured results of magnetic characteristics in embodiments 2 to 6 and comparative examples 5 to 6;
Fig. 4 is a table showing measured results of magnetic characteristics in embodiments 7 to 11 and comparative examples 7 and 8;
Fig. 5 is a graph showing a magnetization curve of a magnetic recording medium in the comparative example 4;
Fig. 6 shows a cross-sectional view, in a model form, of a magnetic recording medium in an embodiment 12;
Fig. 7 is a table showing measured results of magnetic characteristics in embodiments 12 to 14 and comparative examples 9 to 12;
Fig. 8 shows a cross-sectional view, in a model form, of a magnetic recording medium in an embodiment 15;
Fig. 9 shows a cross-sectional view, in a model form, of a magnetic recording medium in a comparative example 13;
Fig. 10 shows a cross-sectional view, in a model form, of a magnetic recording medium in the comparative example 14;
Fig. 11 is a table showing measured results of magnetic characteristics in embodiments 15 to 18 and comparative examples 13 and 14;
Fig. 12 shows a cross-sectional view, in a model form, of a magnetic recording medium in an embodiment 19; and
Fig. 13 is a table showing measured results of magnetic characteristics of the magnetic recording medium in the embodiment 19.

### DESCRIPTION OF THE PREFERRED EMBODIMENTS

### (Embodiment 1)

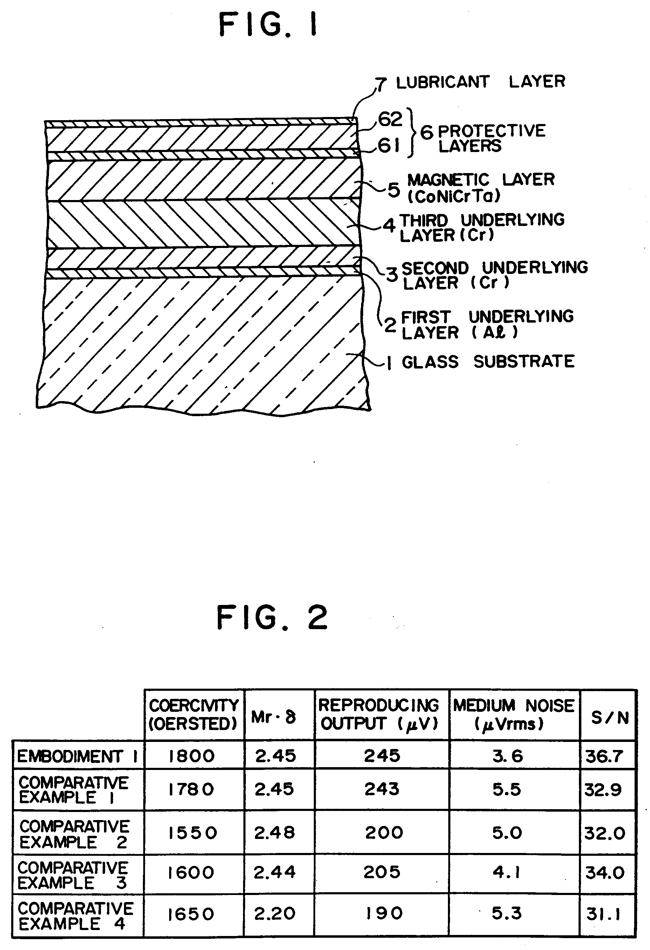

Fig. 1 shows a cross-sectional view, in a model form, of a structure of a magnetic recording medium made by a method for fabricating a magnetic recording medium in a first embodiment of the present invention. Explanation will be briefly made as to the structure of the magnetic recording medium made by the method for fabricating a magnetic recording medium in the embodiment 1, with reference to Fig. 1 and then as to the method for fabricating the magnetic recording medium in the embodiment 1.

As shown in Fig. 1, the magnetic recording medium of the present embodiment is made up of, as major constituent members, a glass substrate 1, a first underlying layer 2, a second underlying layer 3, a third underlying layer 4, a magnetic layer 5, a protective layer 6, and a lubricant layer 7 sequentially formed on the glass substrate 1 in this order.

The glass substrate 1 is prepared by making a chemical reinforced glass plate in the form of a disk having an outer diameter of 65 mm and a thickness of 0.9 mm and by making an opening of 20 mm in diameter in the center of the disk and then by subjecting the disk on its both principal sides to a precision polishing operation to provide a surface roughness Rmax of 30-60 angstroms.

More in detail, the chemical reinforced glass forming the glass substrate 1 contains, as major components, 62-75% of SiO₂ and 5-15% of Al₂O₃, 4-10% of Li₂O, 4-12% of Na₂O and 5.5-15% of ZrO₂ all in weight %, with a weight ratio Na₂O/ZrO₂ of 0.5-2.0 and a weight ratio Al₂O₃/ZrO₂ of 0.4-2.5. The chemical reinforced glass is subjected to an ion exchange process in a processing bath containing Na ions and/or K ions to provide chemical reinforcement to thereby obtain the glass substrate 1 (for details, refer to Japanese Patent Application No. Hei 05-32431).

The first underlying layer 2 is an Al thin film of Rₘₐₓ of 30-75 angstroms thick which reveals non-magnetic and low melting point.

The second underlying layer 3 is a Cr film of about 400 angstroms thick and has a surface roughness that is within 1-2 times, preferably 1-1.5 times that of the glass substrate.

The third underlying layer 4 is a Cr film of about 1200 angstroms thick.

The magnetic layer 5 is a CoNiCrTa film of about 600 angstroms thick. In the illustrated example, the CoNiCrTa film is composed of Co, Ni, Cr and Ta in proportions of 66:25:8:1 (atomic %).

The protective layer 6 is made up of two films, that is, a Cr film 61 of about 50 angstroms thick formed on the magnetic layer 5 and a carbon (C) film 62 of about 300 angstroms thick formed on the Cr film 61.

The lubricant layer 7 is made of perfluoropolyether of about 20 angstroms thick.

If a texture is provided to the structure shown in Fig. 1, a head employing a CSS type can be applied thereto.

Explanation will next be made as to a method for fabricating a magnetic recording medium in the embodiment 1.

First, a chemical reinforced glass plate is cut into a disk which has an outer diameter of 65 mm and a thickness of 0.9 mm and which is provided in its center with an opening of 20 mm in diameter, and then the disk is subjected on its both principal sides to a precision polishing operation to provide a surface roughness Rₘₐₓ of 30-100 angstroms, preferably 30-60 angstroms, to thereby form a glass substrate 1.

Then the glass substrate 1 is continuously subjected to a heating process and film forming processes to form a first underlying layer 2 having a surface roughness Rₘₐₓ of 30-150 angstroms, preferably 30-90 angstroms, and a second underlying layer 3 on the glass substrate 1 (which laminates will be sometimes referred to as the second-underlying-layer substrate), and then subjected to a heating process and film forming processes to form a third underlying layer 4, a magnetic layer 5 and a protective layer 6 thereon, with use of an inline sputter. The thermal treatment applied to the glass substrate 1 should be made with a temperature as high as possible in a range where the glass substrate cannot be deformed. Under the above treatment, there may arise a case in which impurities contained in the glass substrate 1 are emitted as a gas which is a secondary effect and may cause a damage to the underlying layer or the magnetic layer. The thermal treatment applied to the substrate to which the second underlying layer is attached restricts a thermal discharge from the glass substrate 1 due to the existence of the first and second underlying layers on the main surface of the glass substrate 1 so that heat is efficiently stored in the substrate 1. A temperature for the second thermal treatment can be set lower than that employed for the thermal treatment applied to the glass substrate 1. Two thermal treatments respectively applied to the glass substrate 1 and the substrate with the second underlying layer are performed on the following grounds. That is, a thermal treatment applied to a magnetic layer is one of the essential conditions to improve a magnetic characteristic of a magnetic layer, which has been well known. If the usual thermal treatment would be applied to the magnetic layer after the first and second thermal treatments set forth in the present embodiment were completed, coercivity and resolution can be respectively improved with approximately 10% in comparison that the magnetic layer is not thermally treated. Noises are also decreased with 30-50%. As described above, improvement of the S/N ratio can be expected by employing the two step thermal treatment shown in the present embodiment.

Used as the inline sputter was a known inline DC magnetron sputter. Though not shown, this inline sputter comprises 5 chambers, that is, a first chamber extended in a feed or transfer direction and provided therein with a substrate heater, a second chamber having Al and Cr targets sequentially installed therein, a third chamber having a heater installed therein, a fourth chamber having Cr and CoNiCrTa targets sequentially installed therein, and a fifth chamber having Cr and C (carbon) targets sequentially installed therein. More specifically, when introduced into the first chamber through a load lock chamber, the glass substrate 1 is transferred at a predetermined constant speed sequentially through the above respective chambers by means of a predetermined transfer device, during which the following film formation and processing are carried out. That is, a thermal processing process is given to the substrate in the first chamber with a range of temperature of 300-450°C, preferably at 375°C, which does not deform the glass substrate 1. Within the second chamber, an Al film and a Cr film are sequentially formed on the substrate as a first underlying layer 2 of 60 angstroms thick and a second underlying layer 3 of 400 angstroms respectively to obtain a second-underlying-layer substrate. Within the third chamber, the second-underlying-layer substrate is heated at a temperature of 350°C for one minute. Within the fourth chamber, a Cr film and a CoNiCrTa film are sequentially formed on the second-underlying-layer substrate as a third underlying layer 4 of 1,200 angstroms thick and a magnetic layer 5 of 600 angstroms thick respectively. Within the fifth chamber, a Cr film 61 of 50 angstroms thick and a carbon film 62 of 300 angstroms thick are sequentially formed on the resultant substrate to collectively form a protective layer 6. Within the respective chambers, a vacuum level is kept at a pressure of 1 x 10⁻⁵ Torr or less and an argon gas is used as a sputtering gas. The sputtering gas pressures are set to be 5 mTorr, 3 mTorr and 5 m Torr within the second, fourth and fifth chambers respectively.

Subsequently, the resultant substrate subjected to the film formation as far as the protective layer 6 is removed from the above inline sputter, perfluoropolyether is coated on the surface of the protective layer 6 by an imaging process to form a lubricant layer 7 of 20 angstroms thick thereon, thus obtaining a magnetic recording medium for use in the embodiment 1.

### (Comparative Examples 1 to 4)

For comparison with the present invention, a magnetic disk was prepared in substantially the same manner as in the embodiment 1, except that the first underlying layer 2 was made of Cr in place of Al (Comparative Example 1).

Further, a magnetic disk was prepared in substantially the same manner as in the embodiment 1, except that the first underlying layer 2 and second underlying layer 3 were not provided (Comparative Example 2).

A magnetic disk was prepared in substantially the same manner as in the embodiment 1, except that the substrate after subjected to the formation of the second underlying layer 3 was not heated (Comparative Example 3).

Similarly, a magnetic disk was prepared in substantially the same manner as in the embodiment 1, except that the glass substrate was replaced with an Al alloy substrate plated with Ni-P (Comparative Example 4).

The magnetic recording media thus fabricated were subjected to measurements with respect to coercivity (Hc), remanence magnetization film thickness product (Mr·σ) and record/reproducing characteristics (reproducing output, medium noise and S/N ratio), which measurement results were given in Fig. 2 in the form of a table.

The measurement of the coercivity (Hc) and remanence magnetization film thickness product (Mr·σ) were conducted by cutting out samples of 8 mm in diameter from the fabricated magnetic recording media, applying a magnetic field in a direction facing the film surface and measuring them under a maximum external application magnetic field of 10 kOe with use of a vibrating sample type magnetometer.

The measurement of the record/reproducing characteristics was conducted as follows. That is, the measurement was done under conditions that a thin film head was used together with the obtained magnetic disk with a flying height between the magnetic head and disk (head-disk gap) of 0.055 µm and with a relative speed of 6m/s between the thin film head and magnetic disk, and the reproducing outputs at a linear recording density of 70 kfci (70,000 bits per inch) were measured. Further, noise spectrum was measured in signal record/reproducing modes with use of a spectrum analyzer at a carrier frequency of 8.5 MHz with a measurement band of 15 MHz. The thin film head used in the measurements has a coil turn number of 50, a track width of 6µm and a magnetic head gap length of 0.25 µm.

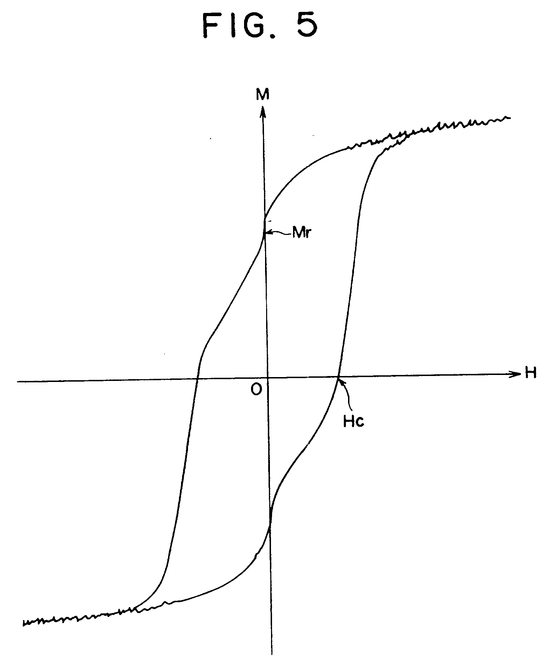

As will be obvious from a table of Fig. 2, the coercivity and reproducing output of the disk in the comparative example 1 are equal to somewhat less than those in the embodiment 1 while the medium noise of the comparative example 1 is much larger than that in the embodiment 1 and the S/N ratio is smaller than that in the embodiment 1. Further, it will be observed that, since the coercivity and reproducing output of the comparative example 2 are both remarkably smaller than those of the embodiment 1 and the medium noise is larger than that of the embodiment 1, the S/N ratio is considerably reduced. Even with regard to the comparative example 3, since the coercivity and reproducing output is smaller and the medium noise is larger, the S/N ratio is reduced. With regard to the comparative example 4, the Ni-P plated layer is magnetized and has such a 2-step magnetization curve as shown in Fig. 5. Thus, as the reproducing output is decreased, the medium noise becomes very high and the S/N ratio becomes drops remarkably.

It will be seen that the embodiment 1, in which the Al first underlying layer 2 and Cr second underlying layer 3 are provided onto the glass substrate, heated and then the third underlying layer 4 and magnetic layer 5 are formed thereon to thereby prepare a magnetic recording medium, has good characteristics and thus the magnetic recording medium of the present embodiment having a high recording density can be effectively used.

### (Embodiments 2 to 6; Comparative Examples 5 and 6)

In these embodiments and comparative examples, the CoNiCrTa film of the embodiment 1 as the magnetic layer 5 was replaced by a CoNiCr film and the temperature of the aforementioned second-underlying-layer substrate was set at 200°C (embodiment 2), 250°C (embodiment 3), 300°C (embodiment 4), 350°C (embodiment 5), 400°C (embodiment 6), 150°C (comparative example 5), and 450°C (comparative example 6) respectively. Except the above, the embodiments and comparative examples had the same arrangement as that of the embodiment 1.

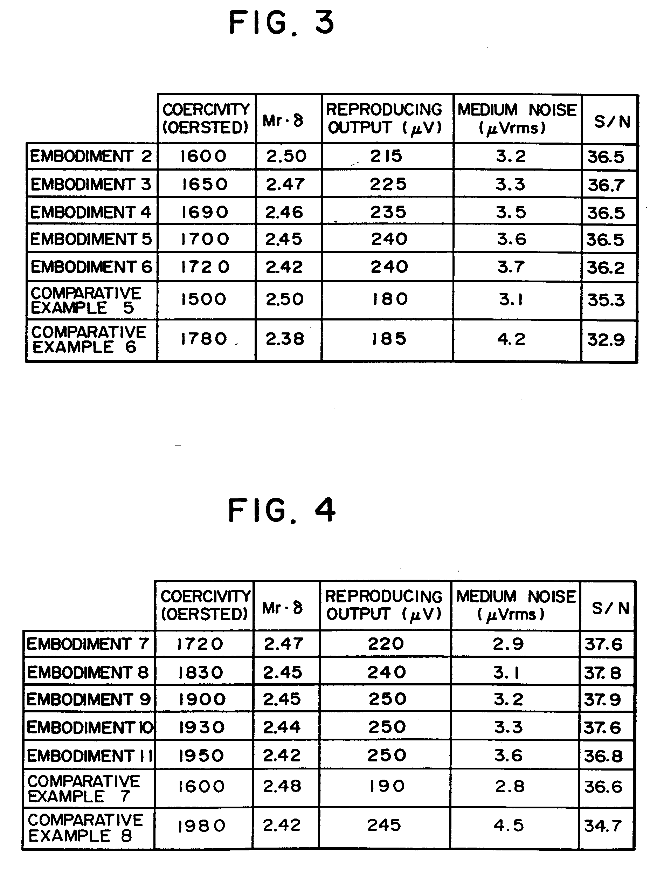

Magnetic recording media fabricated by the fabrication method under the above conditions were subjected to measurements of their coercivity, remanence magnetization film thickness product (Mr·σ) and record/reproducing characteristics (reproducing output, medium noise and S/N ratio) as in the embodiment 1, which measurement results were given in Fig. 3 as a table.

As will be obvious from the table of Fig. 3, the coercivity increases as the substrate temperature is raised. It will be observed that the reproducing output is continuously increased up to a temperature of 400°C, but at temperatures of above this temperature, is decreased to the contrary. The medium noise gradually increases with the increased substrate temperature, which results in that the S/N ratio abruptly drops at temperatures of 400°C or more. It will also be seen that the S/N ratio decreases even at temperatures of 250°C or less and thus a temperature range of 250°C-400°C is preferable in the materials.

### (Embodiments 7 to 11, Comparative Examples 7 and 8)

In these embodiments and comparative examples, the third underlying layer 4 had a double-film structure of a Cr film of 600 angstroms thick and a CrMo film (95 atomic % of Cr and 5 atomic % of Mo) of 60 angstroms thick, the magnetic layer 5 was made of a CoCrPt film (78 atomic % of Co, 11 atomic % of Cr and 11 atomic % of Pt), and the temperature of the second-underlying-layer substrate was set at 250°C (embodiment 7), 300°C (embodiment 8), 350°C (embodiment 9), 400°C (embodiment 10), 450°C (embodiment 11), 200°C (comparative example 7) and 500°C (comparative example 8) respectively. Other than the above, these embodiments and comparative examples had the same arrangement as that of the embodiment 1.

Magnetic recording media fabricated by the fabrication method under the above conditions were subjected to measurements of their coercivity, remanence magnetization film thickness product (Mr·σ) and record/reproducing characteristics (reproducing output, medium noise and S/N ratio) as in the embodiment 1, which measurement results were given in Fig. 4 as a table.

As will be obvious from the table of Fig. 4, the coercivity increases with the increased substrate temperature, while the medium noise abruptly increases at temperatures of 450°C or more. As the reproducing output and noise vary, the S/N ratio abruptly drops at temperatures of 450°C or more. It has been found from the observation results of the disk shape that such abrupt variations in the S/N ratio at temperatures of 450°C or more result not from the magnetic change of the disk but from the deformation of the substrate. That is, it has been turned out that the head is not flown or spaced by a predetermined height from the disk due to the disk deformation with the result that the reproducing output within one turn of the disk is fluctuated (which fluctuations are referred to as the modulation, hereinafter). It has also been turned out that the S/N ratio drops at temperatures of 300°C or less and a temperature range of 300°C-450°C is preferable for these materials.

The present invention has been explained in the connection with the above embodiments, but the invention may include various modifications and applications.

Although the substrate has been made of chemically reinforced aluminosilicate glass in the foregoing embodiments, borosilicate, almino borosilicate, silica glass, soda-lime glass, crystallized glass or other glass may be employed for the substrate. These materials may be easily polished and finished to have their surface roughnesses Rₘₐₓ of 100 angstroms or less, and even when these materials are polished by a polishing technique to such surface roughnesses Rmax of about 200 angstroms, no broken chips nor cracks will take place. Further, the outer diameter of the substrate may be made smaller and the thickness thereof may be made thinner as necessary. Though the surface roughness Rₘₐₓ of the substrate has been set to be 30 angstroms in the foregoing embodiments, it may be set to be as large as about 300 angstroms, achieving the effects of the present invention.

In these embodiments, the first underlying layer has been made of Al. However, the present invention is not limited to the specific example but the first underlying layer may be made, as its major component or components, of any one or two of Ge, Ga, Zr, Ti, Si, Pb, Cu and In.

Although the second and third underlying layers have ben made of Cr in the foregoing embodiments, the layers may be made of non-magnetic material such as TiW, Mo, Ti, Ta, W, Zr, Cu, Al, Zn, In or Sn. In addition, these underlying layers may have a structure of 2 or more films.

The magnetic layer may be made of, in addition to the examples listed in these embodiments, such Co alloy as CoCrTa, CoPtCrSi, CoPtCrTa, CoNiPt, CoNiZr, CoPt, CoNiP, CoCrPtB or CoP, or such magnetic material as Fe₂O₃.

It goes without saying that the underlying, magnetic, protective and other layers may be formed with use of not the inline sputter but an ordinary sputter.

The protective layer has had a two-film structure of the Cr and C films in these embodiments, the Cr film of the protective layer may be replaced by a film made of other material, for example, such non-magnetic material as Mo, Ti, TiW, CrMo, Ta, W, Si or Ge, alloy, oxide, nitride, carbide thereof. Further, the protective layer may have a multi-film structure of 2 or more films. Furthermore, the C film of the protective layer may be replaced by a film of carbon hydride containing hydrogen and/or nitrogen, ZrO₂, SiC, SiN, SiO₂, or such material as organic or inorganic silicon compound dispersed with hard fine particles such as silica particles.

Furthermore, the lubricant layer in the foregoing embodiments has been made of perfluoropolyether, the lubricant layer may be made of fluorocarbon liquid lubricant or lubricant composed a salt of alkali metal of an sulfacid. The thickness of the lubricant layer is set to be preferably between 6-30 angstroms. This is because, when the thickness of the lubricant layer is less than 6 angstroms, sufficient improvement cannot be attained on the anti-friction property; whereas, when the layer thickness exceeds 30 angstroms, the anti-friction property cannot be improved and this also involves a stiction problem.

As explained in, detail in the foregoing, a method for fabricating magnetic recording media in the embodiments 1 to 11 comprises the steps of forming a first underlying layer made of nonmagnetic material on a glass substrate, forming on the first underlying layer a second underlying layer made of nonmagnetic material and different from the first underlying layer, subjecting to a heating treatment the glass substrate having the second underlying layer already formed thereon, forming a third underlying layer made of nonmagnetic material on the second underlying layer after subjected to the heating treatment, forming a magnetic layer on the third underlying layer, forming a protective layer on the magnetic layer through another layer or directly not therethrough, and forming a lubricant layer on the protective layer (arrangement 1).

In the arrangement 1, a substrate heating step is further provided for heating the glass substrate prior to formation of the first underlying layer (arrangement 2). Further, the first underlying layer is composed of Ge, Ga, Zr, Ti, Al, Si, Pb, Cu or In as a major component and the second underlying layer is composed of Cr as a major component (arrangement 3).

Furthermore, in any of the arrangements 1 to 3, the magnetic layer is made essentially of Co, Ni or Cr material and a heating temperature in the second-underlying-layer substrate heating step is between 200°C and 400°C (arrangement 4). Or the magnetic layer is made essentially of Co, Ni or Cr material and a heating temperature in the second-underlying-layer substrate heating step is between 250°C and 450°C (arrangement 5).

The arrangement 5 is constituted of Cr, Pt and Co, each having 5-20, 4-15 and 65-91 in atomic %, respectively.

In the arrangements 1 to 5, the third underlying layer has a multi-film structure of 2 or more films, first one of the films of the third underlying layer disposed on the side of the second underlying layer is made of Cr, second or more one of the films thereof formed on the first film is composed of at least one or more selected from the group of Cr, Mo, Zr, B, Si, Zn, Ti, W, V, Ta and Al as major component or components (arrangement 6).

In the arrangement 6, the first, second and third underlying layers have thicknesses of between 10 and 100 angstroms, between 10 and 1000 angstroms and between 10 and 2000 angstroms respectively (arrangement 7).

In the above arrangement 1, since there are provided the first and second underlying layer formation steps, second-underlying-layer substrate heating step, third underlying layer formation step, magnetic layer formation step, protective layer formation step and lubricant layer formation step, there can be obtained a magnetic recording medium which has a high coercive force for a high recording density and a high resolution and S/N ratio resulting from low medium noise, which runs as low-flown to produce a high reproducing output, and also which has a high CSS durability in the low-flown running. This results from the fact that the glass substrate is used as the substrate, the steps of forming the first, second and third films to collectively form the underlying layer are provided, and the second-underlying-layer substrate heating step of heating the substrate having the second underlying layer already formed thereon is provided. That is, the 3-film underlying layer and the magnetic layer are provided on the glass substrate capable of keeping a high flatness and simultaneously heating of the substrate after the formation of the second underlying layer causes suppression of reduction in the substrate temperature, whereby the crystal growth of these layers can be easily controlled at the time of forming the underlying and magnetic layers, which results in that the magnetic layer having a good crystalline structure can be formed on the underlying layer and the physical and chemical characteristics of the respective layers can be improved to a large extent.

In the arrangement 2, since the substrate heating step of heating the glass substrate is carried out prior to the formation of the first underlying layer, reduction in the substrate temperature can be suppressed to facilitate the formation of a good quality of underlying layer, thus remarkably enhancing the effects of the arrangement 1.

In this case, it is preferable as in the arrangement 3 that the first underlying layer be made of Al and the second underlying layer be made of Cr for the control of crystal growth of the respective layers. In addition, Al promotes the crystal growth of the Cr of the second underlying layer and at the same time, plays a role, when the substrate is heated, in shutting out the gas issued from the glass substrate during the heating of the substrate. Under the synergistic effect, the entire thickness of the underlying layers can be made thin and also the surface roughness thereof can be made small. As a result, in combination with the effect of use of the glass substrate, a low head-disk gap can be realized and a reproducing output can be made high. That is, when the use of the glass substrate as the substrate, the employment of Al and Cr as the materials of the first and second underlying layers and the provision of the second-underlying-layer substrate heating step are effectively integrally combined; there can be attained a magnetic recording medium which is high in the coercive force and resolution, low in medium noise and small in surface roughness.

Further, when the magnetic layer is made of Co-Ni-Cr material as in the arrangement 4, it is necessary to set the heating temperature in the second-underlying-layer substrate heating step at a temperature falling within a range of 200-400°C. When the heating temperature is lower than 200°C, the effect of the substrate heating cannot appear and thus improvement on the coercivity cannot be attained with the result that the reproducing output cannot be improved with the high recording density. Further, when the heating temperature is higher than 400°C, reduction in the remanence magnetization film thickness product (Mr t) is observed and thus reduction in the reproducing output takes place.

When the magnetic layer is made of Co-Pt-Cr material as in the arrangement 5, it is necessary to set the heating temperature in the second-underlying-layer substrate heating step at a temperature falling in a range of 250°C-450°C, desirably in a range of 300°C-450°C. When the heating temperature is lower than 250°C, improvement in the coercive force cannot be seen as in the case of Co-Pt-Cr material, thus resulting in no improvement in the reproducing output. In the case of the Co-Pt-Cr material, it is desirable to set the substrate heating temperature at a higher temperature. When the heating temperature is higher than 450°C, however, this also causes easy deformation of the glass substrate, deterioration of the disk flatness and irregular head-disk gap, thus resulting in that the reproducing output within one turn of the disk fluctuates (which fluctuations are referred to as the modulation, hereinafter).

It is preferable as in the arrangement 6 that the third underlying layer have a multi-film structure of 2 or more films, first one of the films of the third underlying layer disposed on the side of the second underlying layer is made of Cr and second or more one of the films thereof formed on the first film be made of at least one or more elements selected from the group of Cr, Mo, Zr, B, Si, Zn, Ti, W, V, Ta and Al. The combination of these elements of the second or more film is determined by the material of the magnetic layer to be formed on the second film and the combined elements are selected so that the magnetic crystals are orientated to provide suitable record/reproducing characteristics.

As has been explained in the foregoing, in accordance with the method for fabricating the magnetic recording media in the embodiments, since the method comprises the first and second underlying layer formation steps, second-underlying-layer heating step, third underlying layer formation step, magnetic layer formation step, protective layer formation step and lubricant layer formation step; there can be realized a magnetic recording medium which has a high coercivity for a high recording density as well as a high resolution and S/N ratio resulting from a low medium noise, produces a high reproducing output in low-flown running and also has a high CSS durability in the low-flown running.

### (Embodiment 12)

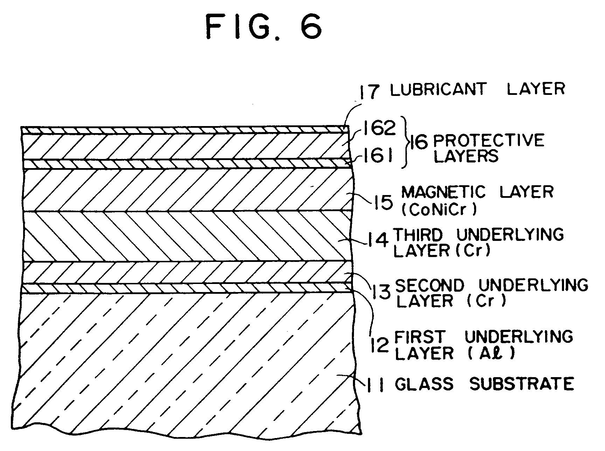

Fig. 6 shows a cross-sectional view, in a model form, of a structure of a magnetic recording medium in the present embodiment 12 of the present invention. Explanation will be made as to the magnetic recording medium and a method for fabricating the medium in the embodiment 12 by referring to Fig. 6.

As shown in Fig. 6, the magnetic recording medium of the present embodiment is made in the form of a magnetic disk which is made up of, as major constituent members, a glass substrate 11, a first underlying layer 12, a second underlying layer 13, a third underlying layer 14, a magnetic layer 15, a protective layer 16, and a lubricant layer 17 sequentially formed on the glass substrate 1 in this order.

The glass substrate 11 is prepared by making a chemically reinforced glass plate in the form of a disk having an outer diameter of 65 mm and a thickness of 0.9 mm and by making an opening of 20 mm in diameter in the center of the disk and then by subjecting the disk on its both principal sides to a precision polishing operation to provide a surface roughness Rₘₐₓ of 30 angstroms.

More in detail, the chemically reinforced glass forming the glass substrate 11 contains, as major components, 62-75% of SiO₂ and 5-15% of Al₂O₃, 4-10% of Li₂O, 4-12% of Na₂O and 5.5-15% of ZrO₂ all in weight %, with a weight ratio Na₂O/ZrO₂ of 0.5-2.0 and a weight ratio Al₂O₃/ZrO₂ of 0.4-2.5. The chemical reinforced glass is subjected to an ion exchange process in a processing bath containing Na ions and/or K ions to provide chemically reinforcement to thereby obtain the glass substrate 1 (for details, refer to Japanese Patent Application No. Hei 05-32431).

The first underlying layer 12 is an Al thin film of about 60 angstroms thick.

The second underlying layer 13 is a Cr film of about 600 angstroms thick and has a surface roughness that is within 1-1.5 that of the glass substrate.

The third underlying layer 14 is a Cr film of about 1200 angstroms thick.

The magnetic layer 15 is a CoNiCr film of about 500 angstroms thick. In the illustrated example, the CoNiCr film is composed of Co, Ni and Cr in proportions of 65:25:10 in atomic %.

The protective layer 16 is made up of two films, that is, a Cr film 161 of about 50 angstroms thick formed on the magnetic layer 15 and a carbon (C) film 162 of about 300 angstroms thick formed on the Cr film 161.

The lubricant layer 17 is prepared by coating lubricant of perfluoropolyether (for example, a trade name AM2001 manufactured by Montedison Company Limited) on the protective layer 16 to have a thickness of about 20 angstroms by an immersion process.

Explanation will next be made as to a method for fabricating a magnetic recording medium in the above embodiment.

First, a chemical reinforced glass plate is cut into a disk which has an outer diameter of 65 mm and a thickness of 0.9 mm and which is provided in its center with an opening of 20 mm in diameter, and then the disk is subjected on its both principal sides to a precision polishing operation to provide a surface roughness Rmax of 30 angstroms to thereby form a glass substrate 11.

Then the glass substrate 11 is continuously subjected to a heating process and film forming processes to form a first underlying layer 12, a second underlying layer 13 on the glass substrate 11, a first underlying layer 12, a second underlying layer 13, a third underlying layer 14, a magnetic layer 15 and a protective layer 16 thereon, with use of an inline sputter.

Used as the inline sputter was a known inline DC magnetron sputter. Though not shown, this inline sputter comprises a first chamber extended in a feed or transfer direction and provided therein with a substrate heater, a second chamber having Al and Cr targets sequentially installed therein, a third chamber having a heater installed therein, a fourth chamber having Cr and CoNiCr targets sequentially installed therein, and a fifth chamber having Cr and C (carbon) targets sequentially installed therein.

More specifically, when introduced into the first chamber through a load lock chamber, the glass substrate 11 is transferred at a predetermined constant speed sequentially through the above respective chambers by means of a predetermined transfer device, during which the following film formation and processing are carried out.

That is, within the first chamber, first of all, the substrate is heated at a temperature of 375 °C for 2 minutes. Within the second chamber, an Al film and a Cr film are sequentially formed on the substrate as a first underlying layer 12 of 60 angstroms thick and a second underlying layer 13 of 600 angstroms respectively. Within the third chamber, a Cr film and a CoNiCr film are sequentially formed on the resultant substrate as a third underlying layer 14 of 1,200 angstroms thick and a magnetic layer 15 of 500 angstroms thick respectively. Within the fifth chamber, a Cr film 161 of 50 angstroms thick and a carbon film 162 of 300 angstroms thick are sequentially formed on the resultant substrate to collectively form a protective layer 16. Within the respective chambers, a vacuum level is kept at a pressure of 1 x 10⁻⁵ Torr or less and an argon gas is used as a sputtering gas. The sputtering gas pressures are set to be 5 mTorr, 3 mTorr and 5 mTorr within the second, third and fourth chambers respectively.

Subsequently, the resultant substrate subjected to the film formation as far as the protective layer 16 is removed from the above inline sputter, perfluoropolyether is coated on the surface of the protective layer 16 by an imaging process to form a lubricant layer 17 of 20 angstroms thick thereon, thus obtaining a magnetic recording medium for use in the embodiment 12.

### (Embodiment 13 and 14)

In the embodiment 13, a magnetic recording medium was prepared by the same fabrication method as in the above embodiment 12 to have the same structure thereas, except that the first underlying layer 12 in the embodiment 12 was changed to have a thickness of 100 angstroms and the second underlying layer 13 was changed to have a thickness of 1000 angstroms (ratio of the first underlying layer to the second underlying layer being 10). Similarly, in the embodiment 14, a magnetic recording medium was prepared by the same fabrication method as in the above embodiment 12 to have the same structure thereas, except that the first underlying layer 12 in the embodiment 12 was changed to have a thickness of 80 angstroms and the second underlying layer 13 was changed to have a thickness of 400 angstroms (ratio of the first underlying layer to the second underlying layer being 5).

### (Comparative Examples 9 to 12)

In the comparative example 9, a magnetic recording medium was prepared by the same fabrication method as in the above embodiment 12 to have the same structure thereas, except that the first underlying layer 12 in the embodiment 12 was changed to have a thickness of 50 angstroms and the second underlying layer 13 was changed to have a thickness of 1000 angstroms (ratio of the first underlying layer to the second underlying layer being 20). Similarly, in the comparative example 10, a magnetic recording medium was prepared by the same fabrication method as in the above embodiment 12 to have the same structure thereas, except that the first underlying layer 12 in the embodiment 12 was changed to have a thickness of 80 angstroms and the second underlying layer 13 was changed to have a thickness of 2000 angstroms (ratio of the first underlying layer to the second underlying layer being 25). Similarly, in the comparative example 11, a magnetic recording medium was prepared by the same fabrication method as in the above embodiment 12 to have the same structure thereas, except that the first underlying layer 12 in the embodiment 12 was changed to have a thickness of 150 angstroms and the second underlying layer 13 was changed to have a thickness of 1500 angstroms (ratio of the first underlying layer to the second underlying layer being 10). Also, in the comparative example 12, a magnetic recording medium was prepared by the same fabrication method as in the above embodiment 12 to have the same structure thereas, except that the first underlying layer 12 in the embodiment 12 was changed to have a thickness of 0 angstroms (absence of the first underlying layer) and the second underlying layer 13 was changed to have a thickness of 1000 angstroms (ratio of the first underlying layer to the second underlying layer being 0).

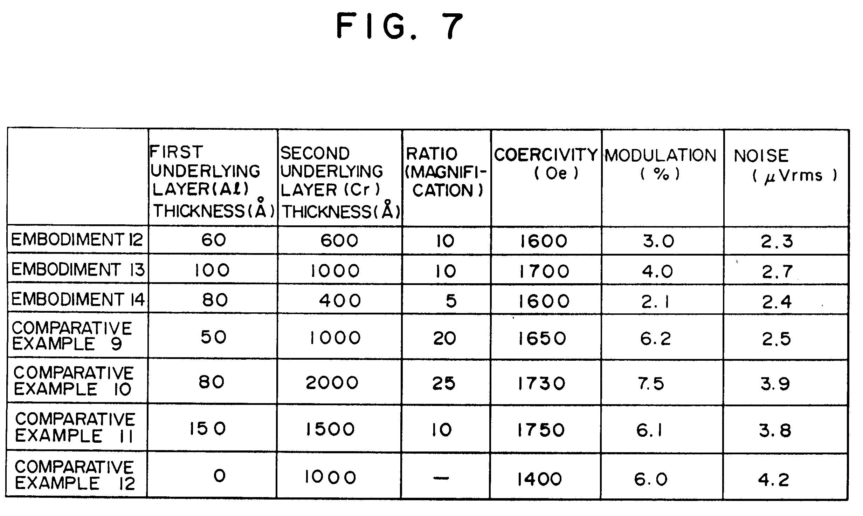

Shown in Fig.7 is a table of measurement results of characteristics of the magnetic recording media in the above embodiments 12 to 14 and comparative examples 9 to 12.

The coercive force (Hc) was measured by cutting out samples of 8 mm in diameter from the fabricated magnetic recording media, applying a magnetic field to the sample in a direction facing its film surface and then measuring the samples with use of a vibrating sample type magnetometer under a maximum external application magnetic field of 10 kOe.

The measurement of the record/reproducing characteristics (envelope modulation and medium noise) was conducted as follows. That is, the measurement was done under conditions that a thin film head was used together with the obtained magnetic disk with a flying height between the magnetic head and disk (head-disk gap) of 0.055 µm and with a relative speed of 6m/s between the thin film head and magnetic disk, and the record/reproducing outputs at a linear recording density of 70 kfci (70,000 bits per inch) were measured. Further, noise spectrum was measured in signal record/reproducing modes with use of a spectrum analyzer at a carrier frequency of 8.5 MHz with a measurement band of 15 MHz. The thin film head used in the measurements has a coil turn number of 50, a track width of 6µm and a magnetic head gap length of 0.25 µm.

As will be obvious from a table of Fig. 7, in the embodiments 12 to 14 wherein the thicknesses of the first underlying layer 12 (Al) were set to be within a range of 10-100 angstroms and the thicknesses of the second underlying layer 13 (Cr) were set to be 2-10 times the thickness of the first underlying layer 12; the coercive force was equal to or more than 1600 Oe, the envelope modulation was equal to or less than 4.0%, the medium noise was equal to or less than 2.7 µVrms. Thus in the embodiments 12 to 14, the sufficient coercivity was secured and the envelope modulation and medium noise were suppressed to sufficiently low levels. In the comparative examples 9 to 12 wherein the first underlying layer 12 (Al) had suitable thicknesses but the second underlying layer 13 (Cr) was thick and thus the film thickness ratio between the both exceeds 10, on the other hand, the envelope modulation was considerably large when compared with that of the embodiments. In particular, in the comparative examples 11 and 12 wherein the thickness of the first underlying layer 12 (Al) was set to be greater than 100 angstroms (at 150 angstroms) (ratio being 100) and wherein the thickness of the first underlying layer 12 (Al) was set to be less than 10 angstroms (at 0 angstroms, i.e., absence of the first underlying layer) respectively; the envelope modulation and medium noise were both larger than those of the embodiments and the coercive force was significantly smaller than those of the embodiments.

Although the present invention has been explained in connection with the embodiments, the invention is not limited to the specific examples but may cover various modifications and applications including the following modifications.

That is, although the substrate has been made of aluminosilicate chemical reinforced glass in the foregoing embodiments, borosilicate, almino borosilicate, silica glass, soda-lime glass or other glass may be employed for the substrate. These materials may be easily polished and finished to have their surface roughnesses Rₘₐₓ of 100 angstroms or less. Further,the outer diameter of the substrate may be made smaller and the thickness thereof may be made thinner as necessary.

In these embodiments, the first underlying layer has been made of Al. However, the present invention is not limited to the specific example but the first underlying layer may be made, as its major component or components, of any one or two of Si, Pb, Cu, In, Ga, Ge, Zr or Ti.

Although the second and third underlying layers have been made of Cr in the foregoing embodiments, the layers may be made of non-magnetic material such as TiW, Mo, Ti, Ta, W, Zr, Cu, Al, Zn, In or Sn. In addition, these underlying layers may have a multi-film structure of 2 or more films.

The magnetic layer may be made of, in addition to the examples listed in these embodiments, such Co alloy as CoNiCrTa, CoNiPt, CoNiZr, CoCrPt, CoPt, CoPtCrTa, CoCrPtB or CoP, or such magnetic material as Fe₂O₃.

It goes without saying that the underlying, magnetic, protective and other layers may be formed with use of not the inline sputter but an ordinary sputter such as, e.g., a stationary opposed target type sputter.

The protective layer has had a two-film structure of the Cr and C films in these embodiments, the Cr film of the protective layer may be replaced by a film made of other material, for example, such non-magnetic material as Mo, Ti, TiW, CrMo, Ta, W, Si or Ge, or oxide, nitride, carbide thereof. Further, the protective layer may have a multifilm structure of 2 or more films. Furthermore, the C film of the protective layer may be replaced by a film of SiO₂, ZrO₂, SiN, SiC, or such material containing hydrogen and/or nitrogen as organic or inorganic silicon compound dispersed with hard fine particles such as silica particles.

Furthermore, the lubricant layer in the foregoing embodiments has been made of perfluoropolyether, the lubricant layer may be made of fluorocarbon liquid lubricant or lubricant composed a salt of alkali metal of an sulfacid. The thickness of the lubricant layer is set to be preferably between 6-30 angstroms. This is because, when the thickness of the lubricant layer is less than 6 angstroms, sufficient improvement cannot be attained on the anti-friction property; whereas, when the layer thickness exceeds 30 angstroms, the stiction property cannot be improved and this also involves an adsorption problem.

As explained in detail in the foregoing, each of magnetic recording media in the embodiments 11 to 14 comprises an underlying layer formed on a glass substrate having a precision-polished surface, a magnetic layer formed on the underlying layer, a protective layer formed on the magnetic layer through another layer or directly not therethrough, and a lubricant layer formed on the protective layer, and wherein the underlying layer is made up of a first underlying layer made of Al and formed on a side contacted with the glass substrate and a second underlying layer made of Cr and formed on the first underlying layer, the first underlying layer is set to have a thickness of 10-100 angstroms and the second underlying layer is set to have a thickness corresponding to 2-10 times the thickness of the first underlying layer (arrangement 1).

In the arrangement 1, the underlying layer has at least one third underlying layer which is formed on the second underlying layer and made of material selected from the group of elements Cr, Mo, Zr, B, Si, Zn, Ti, W, V, Ta and Al (arrangement 2).

In the arrangement 2, the third underlying layer is a Cr film of 200-1600 angstroms thick (arrangement 3).

With such an arrangement, since the underlying layer is made up of a first underlying layer made of Al and formed on a side contacted with the glass substrate and a second underlying layer made of Cr and formed on the first underlying layer, the first underlying layer is set to have a thickness of 10-100 angstroms and the second underlying layer is set to have a thickness corresponding to 2-10 times the thickness of the first underlying layer; there can be obtained a magnetic recording medium which is high in coercivity and small in the noise and envelope modulation within one turn in a reproducing mode.

In this case, the thickness of the first underlying layer is set to be between 10 and 100 angstroms. This is because, when the thickness of the first underlying layer is set to be less than 10 angstroms, the coercivity becomes small, whereas, when the thickness thereof is set to exceed 100 angstroms, the medium noise is increased.

Further, the second underlying layer is set to have a thickness corresponding to 2-10 times the thickness of the first underlying layer. This is because, when the thickness of the second underlying layer is set to be less than a value corresponding to 2 times the thickness of the first underlying layer, the coercivity becomes insufficient and the noise becomes high, whereas, when the second layer thickness is set to exceed a value corresponding to 10 times that of the first underlying layer, the envelope modulation becomes large.

In this case, it is preferable that the third underlying layer be provided as in the arrangement 2 because this improves the noise and modulation characteristics. Further, as in the arrangement 3, it is preferable to set the Cr third underlying layer to be 200-1600 angstroms thick. Such setting has also been confirmed to be advantageous.

As has been explained above in detail, in accordance with the present embodiment, there is provided a magnetic recording medium which comprises an underlying layer formed on a glass substrate, a magnetic layer formed on the underlying layer, a protective layer formed on the magnetic layer through another layer or directly not therethrough, and a lubricant layer formed on the protective layer, and wherein the underlying layer is made up of a first underlying layer made of Al and formed on a side contacted with the glass substrate and a second underlying layer made of Cr and formed on the first underlying layer, the first underlying layer is set to have a thickness of 10-100 angstroms and the second underlying layer is set to have a thickness corresponding to 2-10 times the thickness of the first underlying layer, whereby the coercivity can be made high and the noise and envelope modulation within one turn of the disk in a reproducing mode can be suppressed down to low level.

### (Embodiment 15)

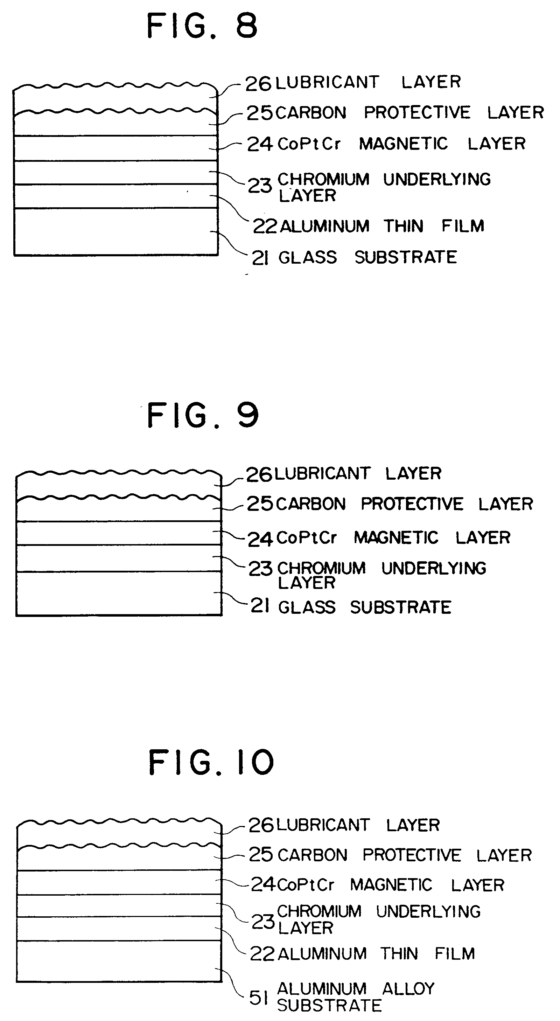

Fig. 8 is a cross-sectional view, in a model form, of a structure of a magnetic recording medium in the present embodiment 15, which structure is different from the structures of the aforementioned magnetic recording mediums. That is, The magnetic disk of the embodiment 15 is made up of a glass substrate 21, a first underlying layer 22, a second underlying layer 23, a magnetic layer 24, a protective layer 25 and a lubricant layer 26 sequentially formed on the glass substrate 21 in this order, the surface of the protective layer being made uneven or textured.

The glass substrate 21 is obtained as in the embodiment 1 by cutting a chemical reinforced glass plate into a disk which has an outer diameter of 65 mm and a thickness of 0.9 mm and which is provided in its center with an opening of 20 mm in diameter, and then subjecting the disk on its both principal sides to a precision polishing operation to provide a surface roughness Rmax of 30 angstroms.

The first underlying layer 22 is an Al thin film of 48 angstroms thick. The second underlying layer 23 is a Cr layer of 130 angstroms thick. The magnetic layer 24 is a CoPtCr magnetic layer of 300 angstroms thick. The protective layer 25 is a carbon (C) protective layer of 130 angstroms thick. The lubricant layer 26 is made of such lubricant material as perfluoropolyether. The protective layer 25 is subjected on its surface with a sputtering process under controlled sputtering conditions to form a texture thereon.

The first and second thermal treatments can be applied to the glass substrate 1 of the embodiment 15 shown in Fig. 8 as performed similarly in the embodiment 1.

A magnetic disk to which such a thermal treatment is applied is constructed such that the underlying layer formed on the glass substrate 1 is constituted of Cr having a double layer structure and layers constituted of Co and Pt are stacked consecutively on the underlying layer. The second thermal treatment should be applied preferably to the first Cr underlying layer but can be applied to the Co layer underneath the Pt layer.

### (Embodiments 16 to 18)

In the embodiments 16 to 18, first underlying layers 22 were used which each correspond to the Al thin film 22 in the magnetic recording medium of the embodiment 15 but have different thicknesses. That is, the aluminum thin film 22 was set to be 50 angstroms thick in the embodiment 16, the aluminum thin film 22 was to be 60 angstroms thick in the embodiment 17, and the aluminum thin film 22 was to be 70 angstroms thick in the embodiment 18.

### (Comparative Examples 13 and 14)

In the comparative example 13, the aluminum thin film 22 as the first underlying layer 22 in the embodiment 15 is not provided so that the second underlying layer 23 is directly formed on the second underlying layer 23, as shown in Fig. 9. In the comparative example 14, the glass substrate 21 in the disk of the embodiment 15 is replaced with an aluminum substrate, as shown in Fig. 10.

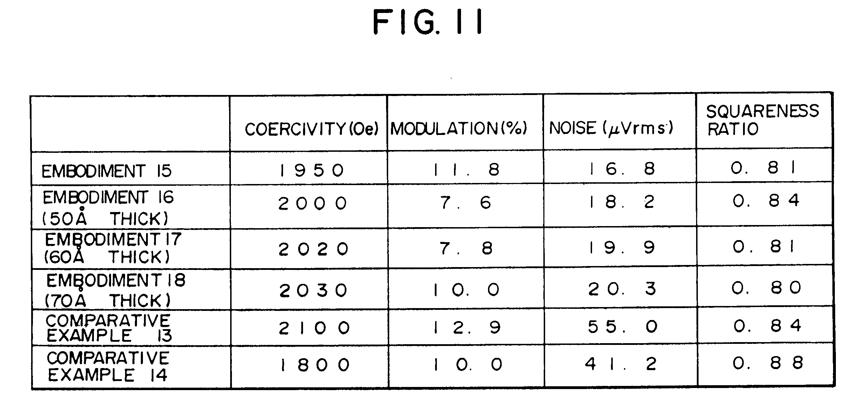

Referring to Fig. 11, there is shown a table of measured results of characteristics of the magnetic recording media as the above embodiments 15 to 18 and comparative examples 13 and 14 under noise measurement conditions which follow. That is, The measurement conditions are that a magnetoresistive (MR) head having a head-disk gap of 0.06 µm is used and a relative speed between the MR head and magnetic disk is set at 6m/s. Under such conditions, record/reproducing characteristics in a linear recording density of 100 kfci (100,000 bits per inch) were measured. Further, noise spectrum was measured in signal record/reproducing modes with use of a spectrum analyzer with a carrier frequency of 9.5 MHz and a measurement band of 18 MHz. The MR head had a coil turn number of 30, track widths of 4.8 µm and 8.5 µm and magnetic head gap lengths of 0.43 µm and 0.31 µm on the write and read sides respectively.

As will be seen from Fig. 11, the noises in the present embodiments are reduced to half or less of those in the comparative examples 13 and 14 under the above measurement conditions. Further, since an uneven or rough surface resulting from the texturing process is provided onto each magnetic recording medium in the embodiments 15 to 18, it is advantageously expected that the header slider can be prevented from being sticked on the magnetic recording disk or a frictional force between the both can be prevented from exceeding a predetermined level during the CSS.

### (Embodiment 19)

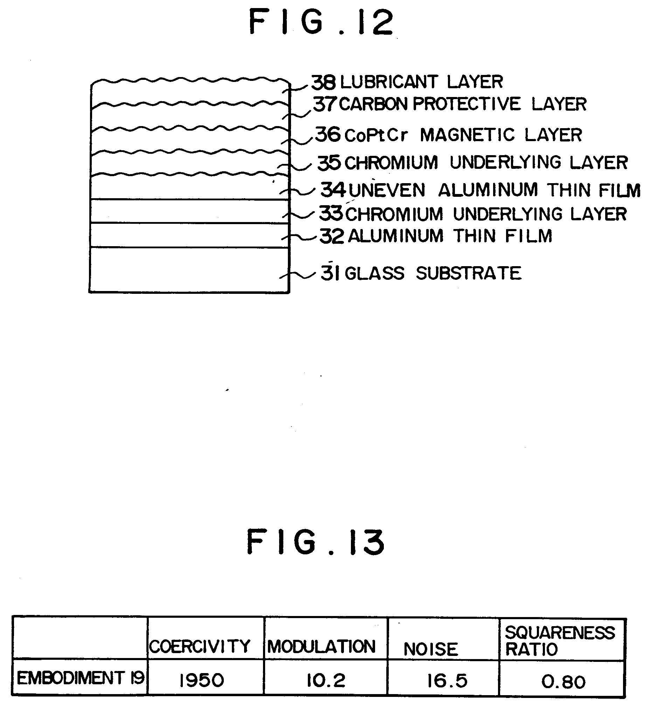

Fig. 12 is a cross-sectional view, in a model form, of a structure of a magnetic recording medium in the embodiment 19. With the magnetic recording medium of Fig. 12, a texture is provided between the a glass substrate 31 and a magnetic layer 36, though the texture is provided to the protective layer in the embodiments 15 to 18.

The glass substrate 31 is similar to the glass substrate 21 of Fig. 8. Formed on the glass substrate 31 is an aluminum thin film 32 having a thickness of 50 angstroms. Formed on the aluminum thin film 32 is a Cr underlying layer 33, on which a uneven aluminum thin film 34 (textured layer) is formed in an island manner. Further formed on the uneven aluminum thin film 34 is a second Cr underlying layer 35, on which a CoPtCr (Co:Pt:Cr = 73:11:16 in atomic %) magnetic layer 36 is formed. Additionally formed on the magnetic layer 36 is a C protective layer 37, on which a lubricant layer 38 is formed.

If the thermal treatment would be applied to the underlying layer 35 underneath the magnetic layer 36, a crystal growth of the magnetic layer 36 is hindered to deteriorate the magnetic characteristic.

Accordingly, the second thermal treatment shown in the first embodiment and in the embodiment 19 can be applied in any manufacturing steps after a single layer or multilayers were formed between the second Cr underlying layer 35 underneath the magnetic layer and the Al thin film 32 formed on the glass substrate 1.

In the case of the embodiment 19 shown in Fig. 12, for example, the second thermal treatment can be applied either to the Cr underlying layer 33 or to the textured Al thin film 34.

There is shown in Fig. 13 is a table of measurement results of characteristics of the magnetic recording medium in the embodiment 19 measured under the same measurement conditions as those in Fig. 11. With the magnetic recording medium of the embodiment 19, the noise is 6.5 µVrms that is the lowest among the noises of the embodiments 15 to 18, as shown in Fig. 13. Further, since the texture is provided on the surface of the magnetic recording medium, substantially the same effect as in the embodiments 15 to 18 can be attained.

Although description was made as to a glass substrate as for a magnetic recording medium, a crystallized glass substrate is also applicable.

## Claims

1. A method for fabricating magnetic recording medium having an improved signal to noise (S/N) ratio comprising the steps of:
forming a first underlying layer made of nonmagnetic and low melting point metallic material on a glass substrate;
forming on said first underlying layer a second underlying layer made of nonmagnetic material and different from the first underlying layer;
subjecting to a heating treatment the glass substrate having said second underlying layer already formed thereon;
forming a third underlying layer made of nonmagnetic material on the second underlying layer after subjected to said heating treatment;
forming a magnetic layer on said third underlying layer;
forming a protective layer on said magnetic layer through another layer or directly not therethrough; and
forming a lubricant layer on said protective layer.

2. A method as set forth in claim 1, wherein said second underlying layer has a surface roughness corresponding to 1-2 times or less that of said glass substrate.

3. A method as set forth in claim 1, further comprising a step of heating said glass substrate prior to formation of said first underlying layer.

4. A method as set forth in claim 1, wherein said first underlying layer is composed of Ge, Ga, Zr, Ti, Al, Si, Pb, Cu or In as a major component and said second underlying layer is composed of Cr as a major component.

5. A method as set forth in claim 1, wherein said magnetic layer is made essentially of Co, Ni and Cr material and a heating temperature in said second-underlying-layer substrate heating step is between 200°C and 400°C.

6. A method as set forth in claim 1, wherein said magnetic layer is made essentially of Co, Pt and Cr material and a heating temperature in said second-underlying-layer substrate heating step is between 250°C and 450°C.

7. A method as set forth in claim 1, wherein said third underlying layer has a multi-film structure of 2 or more films, first one of the films of the third underlying layer disposed on the side of said second underlying layer is made of Cr, second or more one of the films thereof formed on said first film is composed of at least one or more selected from the group of Cr, Mo, Zr, B, Si, Zn, Ti, W, V, Ta and Al as major component or components.

8. A method as set forth in claim 6, wherein said first, second and third underlying layers have thicknesses of between 10 and 100 angstroms, between 10 and 1000 angstroms and between 10 and 2000 angstroms respectively.

9. A method as set forth in claim 1, wherein said protective layer is made of C, carbon hydride containing hydrogen and/or nitrogen, ZrO₂, SiC, SiN, SiO₂ or organic or inorganic silicon compound dispersed with hard fine particles.

10. A magnetic recording medium fabricated by the method as set forth in claim 1.

11. A magnetic recording medium having an improved signal to noise (S/N) ratio comprising:
an underlying layer formed on a glass substrate having a mirror surface;
a magnetic layer formed on said underlying layer;
a protective layer formed on said magnetic layer through another layer or directly not therethrough; and
a lubricant layer formed on said protective layer,
wherein said underlying layer includes a first underlying layer of a non-texture layer provided on a side contacted with said glass substrate and made of, as major component or components, one or more of Al, Si, Pb, Cu, In, Ga, Ge, Zr or Ti to provide noise reducing effect and a second underlying layer formed on said first underlying layer and made of any of Cr, TiW, Mo, Ti, Ta, W, Zr, Cu, Al, Zn, In and Sn.

12. A magnetic recording medium as set forth in claim 11, wherein said non-texture layer has a surface roughness corresponding to 1-1.5 times or less that of said glass substrate.

13. A magnetic recording medium as set forth in claim 11, wherein said first underlying layer is set to have a thickness of 10-100 angstroms and said second underlying layer is set to have a thickness corresponding to 2-10 times the thickness of said first underlying layer.

14. A magnetic recording medium as set forth in claim 11 wherein, said underlying layer has at least one third underlying layer which is formed on said second underlying layer and made of material selected from the group of elements Cr, Mo, Zr, B, Si, Zn, Ti, W, V, Ta and Al.

15. A magnetic recording medium as set forth in claim 14 wherein said third underlying layer is a Cr film of 200-1600 angstroms thick.

16. A magnetic recording medium as set forth in claim 11, wherein said protective layer is made of C, SiO₂, ZrO₂, SiN, SiC or organic or inorganic silicon compound dispersed with hard fine particles.

17. A magnetic recording medium as set forth in claim 11, wherein a chemical reinforced glass forming said glass substrate contains 62-75 weight % of SiO₂, 5-15 weight % of Al₂O₃, 4-10 weight % of Li₂O, 4-12 weight % of Na₂O and 5.5-15 weight % of ZrO₂, an Na₂O/ZrO₂ ratio is between 0.5 and 2.0, an Al₂O₃/ZrO₂ is between 0.4 and 2.5.

18. A magnetic recording medium as set forth in claim 10, wherein said protective layer is made to be uneven on its surface to prevent adsorption with a magnetic head.

19. A magnetic recording medium as set forth in claim 11, wherein said underlying layer is made to be uneven on its surface to prevent adsorption with a magnetic head.

20. A magnetic recording medium as set forth in claim 19, wherein said underlying layer includes an Al thin film formed on the glass substrate having the precision-polished surface, a first Cr film formed on said Al thin film, an uneven Al thin film formed in an island manner on said first Cr film, and a second Cr film formed on said uneven Al thin film.

21. A method of fabricating a magnetic recording medium comprising:
forming a first underlying layer made of nonmagnetic metallic material on a glass substrate;
forming on said first underlying layer a second underlying layer made of nonmagnetic material and different from the first underlying layer;
subjecting to a heating treatment the glass substrate having said first and second underlying layers formed thereon;
forming a third underlying layer made of nonmagnetic material on the second underlying layer after said heating treatment;
forming a magnetic layer over said third underlying layer;
forming a protective layer over said magnetic layer; and
forming a lubricant layer on said protective layer.
